# EUROPÄISCHE PATENTSCHRIFT

(11) **EP 2 853 844 B1**
(45) Veröffentlichungstag und Bekanntmachung des Hinweises auf die Patenterteilung: **04.11.2020**
(21) Anmeldenummer: 14178101.3
(22) Anmeldetag: 23.07.2014
(51) Int. Cl.: F25B 47/02

(54) **Verfahren zum Enteisen einer Wärmepumpe**
Method for de-icing a heat pump
Procédé de dégivrage d'une pompe à chaleur

(30) Priorität: 13.09.2013 DE 102013218429
(43) Veröffentlichungstag der Anmeldung: 01.04.2015
(73) Patentinhaber: Robert Bosch GmbH, 70442 Stuttgart (DE)
(72) Erfinder: Eklund, Gunnar, 573 92 Tranas (SE); Gustafsson, Kjell, 583 36 Linkoeping (SE); Akerstedt, Andreas, 573 38 Tranas (SE)

(56) Entgegenhaltungen:
- EP-A1- 2 012 078
- EP-A1- 2 436 999
- US-A- 5 460 009

## Beschreibung

Die Erfindung betrifft ein Verfahren zum Enteisen einer Wärmepumpe nach dem Oberbegriff des Patentanspruchs 1.

Mit Hilfe von Wärmepumpen wird unter Aufwendung von technischer Arbeit thermische Energie von einer kühlen Umgebung, beispielsweise aus einer Außenluft, aufgenommen und zusammen mit einer Antriebsenergie als Nutzwärme abgegeben. Dabei erfolgt die Wärmeaufnahme üblicherweise in einem Verdampfer und die Wärmeabgabe über einen Kondensator beziehungsweise über entsprechende mit diesen Elementen zusammengeschaltete Wärmetauscher.

Kompressor, Kondensator und Verdampfer sind dabei in einem Kältemittelkreislauf eingebunden. Als Kältemittel werden Fluide eingesetzt, die bei niedrigem Druck und niedriger Kältemitteltemperatur unter Wärmezufuhr verdampfen und nach der Verdichtung auf einen höheren Druck unter Wärmeabgabe bei höherer Kältemitteltemperatur wieder kondensieren. Mit Hilfe des Kompressors wird das Kältemittel auf den entsprechend höheren Druck gebracht, wobei das Kältemittel gasförmig ist. Im daran sich im Kältemittelkreislauf anschließenden Kondensator erfolgt eine Verflüssigung des Kältemittels unter Wärmeabgabe. Anschließend wird das Kältemittel entspannt, beispielsweise über Expansionsventile, eine Drossel oder Ähnliches und mit geringem Druck und relativ geringer Temperatur dem Verdampfer zugeführt. Dort nimmt das Kältemittel erneut Wärme auf und wird gasförmig dem Kompressor wieder zugeführt. Dabei durchströmt das Kältemittel den Kältemittelkreislauf in einer Normal-Richtung.

Im Heizmodus der Wärmepumpe erfolgen also eine Wärmeabgabe im Bereich des Kondensators und eine Wärmeaufnahme im Bereich des Verdampfers. Insbesondere bei Luftwasserwärmepumpen, die für die Raum- und/oder Brauchwassererwärmung in Ein- oder Mehrfamilienhäusern zum Einsatz kommen, wird der Verdampfer mit der Umgebungsluft, also einer Außenluft, durchströmt. Diese wird dabei abgekühlt und die entsprechende Wärme an das Kältemittel übertragen. Zur Verstärkung der Durchströmung und damit einer Verbesserung der erreichbaren Wirkleistung ist dabei dem Verdampfer in der Regel ein Ventilator zugeordnet, mit dem ein Luftstrom über dem Verdampfer gefördert wird. Dieser Ventilator kann drehzahlvariabel ausgeführt sein, wobei seine Drehzahl dann steuerbar bzw. veränderbar ist.

Bei kühleren Außentemperaturen von beispielsweise weniger als 5° kann es aufgrund der geringen Oberflächentemperatur des Verdampfers zu einer Kondensation der in der Außenluft enthaltenen Feuchtigkeit auf der Verdampferoberfläche kommen, wobei die kondensierte Flüssigkeit dann gefrieren kann. Es kommt also zu einer Vereisung des Verdampfers, was wegen der Wärmedämmwirkung einer Eisschicht bzw. Reifschicht zwischen Außenluft und einer Oberfläche des Verdampfers einen geringeren Wärmeübergang und somit eine längere Betriebsdauer nach sich zieht, was einen erhöhten Energiebedarf und damit einen verringerten Wirkungsgrad der Wärmepumpe zur Folge hat.

Üblicherweise können Wärmepumpen auch in einem Kühlmodus betrieben werden, in dem durch eine Umkehr der Strömungsrichtung im Kältemittelkreislauf von einer Normal-Richtung in eine umgekehrte Normal-Richtung Wärme vom Verdampfer abgegeben und vom Kondensator aufgenommen wird. Kondensator und Verdampfer vertauschen damit sozusagen ihre Funktionen. Dadurch ist beispielsweise eine vollständige Raumklimatisierung möglich, wobei im Heizmodus ein Erwärmen von Raumluft und im Kühlmodus ein Abkühlen der Raumluft erfolgt.

Zum Enteisen bzw. Abtauen des Verdampfers ist es bekannt, den Kühlmodus zu nutzen und den Kältemittelkreislauf in umgekehrter Normal-Richtung zu betreiben. Da die Wärmeaufnahme aber nicht gezielt zur Abkühlung beispielsweise von Raumluft dienen soll, wird ein entsprechender Modus als Kalt-Enteisungsmodus bezeichnet, bei dem gegebenenfalls eine Umgehung des Kondensators mittels Bypassverbindung erfolgt. Dabei wird das Kältemittel wie im Kühlmodus in umgekehrter Normal-Richtung durch den Kältemittelkreislauf geführt, sodass der Kondensator und der Verdampfer ebenfalls wie im Kühlmodus ihre Funktionen tauschen. Es erfolgt eine Erwärmung des eigentlichen Verdampfers und eine Wärmeaufnahme im Bereich des Kondensators, falls keine Bypassverbindung genutzt wird.

Durch Betrieb der Wärmepumpe im Kühlmodus bzw. im Kalt-Enteisungsmodus ist es so zuverlässig möglich, die Enteisung zu beseitigen. Der auf seiner Luftseite vereiste Verdampfer wird dann von innen erwärmt, wobei das außen anhaftende Eis schmilzt und in einer Kondensatorauffangwanne aufgefangen wird. Allerdings kommt es dabei immer zu einer Unterbrechung des Heizmodus, was zu Komforteinbußen führt.

Die EP 2012078 A1 wie auch die EP 2436999 A1 offenbaren einen Luftkonditionierer mit einem Kältemittelkompressionskreislauf und einer Regelungseinheit, die bei Frostbildung auf einem Außenwärmetauscher eine Drehzahl eines den Außenwärmetauscher mit Luft versorgenden Gebläse reduziert. Gemäß dem zweitgenannten Dokument erhöht die Regelungseinheit gleichzeitig, oder wenn eine Verschlechterung der Wärmeversorgung an einem Innenwärmetauscher eintritt, eine Kompressorfrequenz. Sowohl die EP 2012078 A1 als auch die EP 2436999 A offenbaren ein Verfahren gemäß dem Oberbegriff des Anspruchs 1 zum Enteisen einer Wärmepumpe.

Aus der US 5460009 A ist ein Kühlsystem bekannt, das bei exzessiver Eisbildung auf einem Gefrierraumwärmetauscher den Wärmeübertragungskreislauf des Kältemittels umkehrt, um den Gefrierraumwärmetauscher abzutauen.

Der Erfindung liegt nun die Aufgabe zugrunde, ein Verfahren zum Enteisen einer Wärmepumpe anzugeben, bei der ein Betrieb des Kältemittelkreislaufs im Kühlmodus bzw. im Kalt-Enteisungsmodus nicht erforderlich ist.

Erfindungsgemäß wird diese Aufgabe mit einem Verfahren mit den Merkmalen des Anspruchs 1 gelöst. Vorteilhafte Weiterbildungen sind den Unteransprüchen zu entnehmen.

Bei einem Verfahren zum Enteisen einer Wärmepumpe, die einen Kältemittelkreislauf mit einem Kompressor, einem Kondensator und einem Verdampfer aufweist, wobei dem Verdampfer ein steuerbarer, drehzahlvariabler Ventilator zugeordnet ist und der Kältemittelkreislauf im Heizmodus und im Kühlmodus betreibbar ist, ist erfindungsgemäß vorgesehen, dass zum Enteisen des Verdampfers in einem Warm-Enteisungsmodus der Kältemittelkreislauf in Normal-Richtung betrieben wird und gegenüber dem Heizmodus eine Kompressorleistung reduziert und eine Ventilatorleistung erhöht wird.

Durch Reduzieren der Kompressorleistung, also insbesondere einer Kompressorgeschwindigkeit beziehungsweise -Drehzahl verringert sich eine Strömungsgeschwindigkeit des Kältemittels und damit die Wärmeaufnahme im Bereich des Verdampfers. Damit erhöht sich eine Oberflächentemperatur des Verdampfers. Dieser Effekt wird noch dadurch verstärkt, dass durch eine Steigerung der Ventilatorleistung, also insbesondere einer Ventilatordrehzahl, eine erhöhte Luftmenge über den Verdampfer geleitet wird. Damit ist es zumindest bei nicht zu kalten Außentemperaturen möglich, den Verdampfer zu enteisen, ohne dass durch eine Umkehrung der Strömungsrichtung der Heizmodus vollständig unterbrochen beziehungsweise die Wärmepumpe im Kühlmodus betrieben werden muss.

Um auch bei kälteren Außentemperaturen eine sichere Enteisung des Verdampfers gewährleisten zu können, ist vorgesehen, dass die Wärmepumpe zum Enteisen im Kalt-Enteisungsmodus betrieben wird, in dem die Wärmepumpe über einen gewissen Zeitraum im Wesentlichen wie im Kühlmodus betrieben wird. Es ist also auch möglich, eine Enteisung wie nach dem Stand der Technik üblich vorzunehmen. Dabei kann gegebenenfalls der Kondensator über eine Bypassverbindung umgangen werden, um die Beeinträchtigung aufgrund von Wärmeaufnahme durch den Kondensator zu verhindern.

Insgesamt wird damit eine sehr hohe Betriebssicherheit bei hohem Heizkomfort erreicht.

Vorzugsweise umfasst der Warm-Enteisungsmodus einen geräuschreduzierten Warm-Enteisungsmodus und einen Standard-Warm-Enteisungsmodus. Im geräuschreduzierten Warm-Enteisungsmodus wird der Kompressor gestoppt und die Ventilatorleistung auf eine geräuschreduzierten Warm-Enteisungsleistung erhöht, die höher ist als eine durchschnittliche Ventilatorleistung im Heizmodus. Die geräuschreduzierte Warm-Enteisungsleistung kann dabei als Wert in einer übergeordneten Steuerung hinterlegt sein. Im Standard-Warm Enteisungsmodus wird die Kompressorleistung auf eine Warm-Enteisungsleistung größer Null reduziert und die Ventilatorleistung auf eine Standard-Warm-Enteisungsleistung erhöht. Die Standard-Warm-Enteisungsleistung des Ventilators ist höher als die geräuschreduzierte Warm-Enteisungsleistung und entspricht insbesondere einer maximalen Ventilatorleistung. Die Lärmbelastung durch eine Erhöhung der Ventilatorleistung kann so auf Wunsch reduziert werden, beispielsweise zu Ruhezeiten. Die Wahl des entsprechenden Warm-Enteisungsmodus, also ob der geräuschreduzierte Warm-Enteisungsmodus oder der Standard-Warm-Enteisungsmodus gewählt wird, kann dabei insbesondere von einem Betriebsmodus der Wärmepumpe abhängig sein. Falls dort ein geräuschreduzierter Modus ausgewählt ist, wird also der geräuschreduzierte Warm-Enteisungsmodus genutzt während der Standard-Warm-Enteisungsmodus gewählt wird, wenn die Wärmepumpe im Standardmodus betrieben wird.

Bevorzugterweise wird einer der Enteisungsmodi insbesondere automatisch ausgewählt und gestartet, wenn bei einer Außentemperatur unterhalb einer maximalen Außentemperatur eine durchschnittliche Differenz zwischen einer Kältemitteltemperatur und der Außentemperatur überschritten wird und/oder eine vorgebbare maximale Betriebsdauer und/oder eine maximale Heizdauer erreicht ist. Falls die Außentemperatur, also eine Ist-Außentemperatur, höher ist als eine im System hinterlegte maximale Außentemperatur von beispielsweise 10 oder 20°C, ist kein Vereisen zu befürchten und dementsprechend ist es auch nicht notwendig, einen Enteisungsmodus zu starten. Sonst soll vorzugsweise automatisch nach einer maximalen Betriebsdauer ein Enteisen erfolgen. Bereits vor Erreichen der maximalen Betriebsdauer soll der Enteisungsmodus gestartet werden, falls eine aktuell ermittelte Differenz zwischen einer Kältemitteltemperatur, die beispielsweise in Strömungsrichtung vor dem Verdampfer ermittelt wird, und der Außentemperatur mindestens um einen gewissen Betrag von einer durchschnittlichen Differenz abweicht. Die durchschnittliche Differenz ergibt sich beispielsweise durch die insbesondere periodische Ermittlung der Differenz über einen längeren Zeitraum mit anschließender Mittelwertbildung. Dabei kann der Zeitraum der Betriebsdauer im Heizmodus entsprechen. Eine plötzliche Abweichung der aktuell ermittelten Differenz von der über einen längeren Zeitraum ermittelten durchschnittlichen Differenz oder einer als Referenz hinterlegten durchschnittlichen Differenz ist dabei ein Indiz, dass eine Vereisung des Verdampfers aufgetreten ist, so das ein Enteisungsmodus beginnen sollte.

Die Kältemitteltemperatur wird dabei benachbart zum Verdampfer, beispielsweise in Strömungsrichtung vor dem Verdampfer, erfasst. Im Kühlmodus bzw. Kalt-Enteisungsmodus bei umgekehrter Strömungsrichtung wird dann die Kältemitteltemperatur entsprechend in Strömungsrichtung hinter dem Verdampfer gemessen. Wenn dabei ein Unterschied zwischen der ermittelten Differenz zwischen der Kältemitteltemperatur und der Außentemperatur und der durchschnittliche Differenz zu groß wird, ist dies ein Hinweis auf eine Vereisung am Verdampfer, sodass eine Enteisung erforderlich ist und einer der Enteisungsmodi gestartet werden sollte.

Dabei ist besonders bevorzugt, dass sich eine maximale Heizdauer verkürzt, wenn die Außentemperatur unterhalb einer Mindestaußentemperatur ist und sich verlängert, wenn die Außentemperatur die Mindestaußentemperatur übersteigt. Dies kann beispielsweise mittels eines Countdown Zählers realisiert werden, der beispielsweise schrittweise verringert wird, wenn im Heizmodus der Wärmepumpe die Außentemperatur unter einer Mindestaußentemperatur liegt und wieder erhöht wird, wenn die Außentemperatur die Mindestaußentemperatur übersteigt. Dadurch wird berücksichtigt, dass bei wärmeren Außentemperaturen eine Enteisung weniger zu befürchten ist und insbesondere einen längeren Zeitraum erfordert. Unnötiges Enteisen wird so vermieden. Die Mindestaußentemperatur kann dabei beispielsweise als Wert im System hinterlegt sein.

Der Kalt-Enteisungsmodus wird insbesondere dann gewählt und gestartet, wenn zusätzlich zu den oben genannten Bedingungen, also eine entsprechend hohen Abweichung von einer durchschnittlichen Differenz zwischen Kältemitteltemperatur und Außentemperatur oder einem Erreichen der maximalen Betriebsdauer beziehungsweise der maximalen Heizdauer zumindest eine der folgenden Bedingungen erfüllt ist:
a) Die Außentemperatur ist unterhalb der Mindestaußentemperatur und/oder
b) Eine minimale Heizdauer ist noch nicht erreicht, wobei der Betrieb im Kalt-Enteisungsmodus dann nach Überschreiten der minimalen Heizdauer und zusätzlich Ablauf eines insbesondere mit Überschreiten der minimalen Heizdauer beginnenden Wartezeitraums beginnt,
wobei in allen übrigen Fällen der Warm-Enteisungsmodus gewählt wird.

Durch diese Vorgehensweise wird sichergestellt, dass immer der effizientere Enteisungsmodus gewählt wird, da beispielsweise bei geringen Außentemperaturen der Warm-Enteisungsmodus möglicherweise nicht mehr zuverlässig arbeitet. Werte für die minimale Heizdauer und den Wartezeitraum können dabei wie die Mindestaußentemperatur im System hinterlegt sein.

Eine Erhöhung der Betriebssicherheit wird dadurch erreicht, wenn unabhängig von anderen Bedingungen der Kalt-Enteisungsmodus immer dann gestartet wird, wenn eine Kältemitteltemperatur eine minimale Starttemperatur unterschreitet.

Der Kalt-Enteisungsmodus wird insbesondere dann beendet, wenn zumindest eine der folgenden Bedingungen erfüllt ist:
a) Eine Kältemitteltemperatur, die benachbart zum Verdampfer, also in Strömungsrichtung hinter oder vor dem Verdampfer, erfasst wird, übersteigt eine insbesondere im System hinterlegte Minimaltemperatur und eine minimale Kalt-Enteisungsdauer, die insbesondere ebenfalls im System hinterlegt ist, ist überschritten und/oder
b) die maximale Kalt-Enteisungsdauer ist überschritten, wobei die maximale Kalt-Enteisungsdauer ebenfalls als Wert im System hinterlegt sein kann.

Sobald die benachbart zum Verdampfer erfasste Kältemitteltemperatur eine vorgegebene Minimaltemperatur übersteigt ist dies ein Hinweis darauf, dass eine Enteisung des Verdampfers abgeschlossen ist. Dies wird zusätzlich noch dadurch abgesichert, dass eine vorgegebene minimale Kalt-Enteisungsdauer zu überschreiten ist, also nicht bereits nach sehr kurzer Zeit ein Beenden des Enteisungsmodus erfolgt. Ebenso dient das Beenden des Kalt-Enteisungsmodus nach Erreichen einer maximalen, vorgebbaren Kalt-Enteisungsdauer der Erhöhung der Betriebssicherheit. So ist es in jedem Fall nach Ablauf der maximalen Kalt-Enteisungsdauer wieder möglich, die Wärmepumpe im Heizmodus zu betreiben. Die Kältemitteltemperatur wird dabei benachbart zum Verdampfer in Strömungsrichtung hinter oder vor dem Verdampfer erfasst.

Die Kältemitteltemperatur wird dabei insbesondere nach einer Wärmeabgabe des Kältemittels gemessen, also in Strömungsrichtung hinter dem Verdampfer.

Der Warm-Enteisungsmodus wird insbesondere dann beendet, wenn eine der folgenden Bedingungen erfüllt ist:
a) Die durchschnittliche Temperaturdifferenz zwischen der Außentemperatur und der Kältemitteltemperatur benachbart zum Verdampfer, insbesondere in Strömungsrichtung vor oder hinter dem Verdampfer, nimmt zu oder bleibt konstant und eine minimale Warm-Enteisungsdauer ist überschritten, oder
b) eine maximale Warm-Enteisungsdauer ist überschritten.

Sobald die Temperaturdifferenz zwischen der Außentemperatur und der Kältemitteltemperatur nicht mehr abnimmt ist ein weitgehender Angleich der Oberflächentemperatur des Verdampfers an die Außentemperatur erfolgt. Ein weiteres Erwärmen des Verdampfers ist dann im Warm-Enteisungsmodus nicht möglich. Dementsprechend kann der Warm-Enteisungsmodus beendet werden. Um ein frühzeitiges Beenden des Enteisungsmodus zu verhindern, ist dabei als weitere Voraussetzung vorgesehen, dass eine minimale Warm-Enteisungsdauer, die als Wert im System hinterlegt sein kann, erreicht werden soll. Um nun auch beispielsweise in einem Fehlerfall einen normalen Weiterbetrieb der Wärmepumpe zu erreichen, ist vorgesehen, nach Erreichen einer maximalen Warm-Enteisungsdauer den Warm-Enteisungsmodus zu beenden, unabhängig von einer benachbart zum Verdampfer gemessenen Kältemitteltemperatur.

Bevorzugterweise erfolgt die Erfassung der Kältemitteltemperatur immer an gleicher Position im Kältemittelkreislauf. Da im Warm-Enteisungsmodus die Wärmepumpe ähnlich wie im Heizmodus arbeitet und damit der Kältemittelkreis in Normal-Richtung betrieben wird, erfolgt die Messung der Kältemitteltemperatur in Strömungsrichtung beispielsweise vor dem Verdampfer und im Kalt-Enteisungsmodus unter Ausnutzung der gleichen Messposition bzw. des gleichen Temperatursensors in Strömungsrichtung hinter dem Verdampfer, da im Kalt-Enteisungsmodus der Kältemittelkreis in umgekehrter Normal-Richtung durchströmt wird. Eine Messung an der entgegengesetzten Seite des Verdampfers ist aber ebenfalls möglich.

Vorzugsweise wird es als Fehler registriert und insbesondere eine Fehlermeldung ausgegeben, wenn der Kalt-Enteisungsmodus durch Erreichen der maximalen Kalt-Enteisungsdauer beendet wird. Genau so wird vorteilhafterweise vorgegangen, wenn der Warm-Enteisungsmodus durch Erreichen der maximalen Warm-Enteisungsdauer beendet wird, ohne dass die Kältemitteltemperatur hinter dem Verdampfer eine Minimaltemperatur übersteigt. So kann das Auftreten von Fehlern protokolliert werden und bei nachfolgenden Wartungsarbeiten berücksichtigt werden.

Die Erfindung wird im Folgenden anhand bevorzugter Ausführungsbeispiele in Verbindung mit den Zeichnungen näher beschrieben. Hierin zeigen in schematischer Ansicht:
- Figur 1: einen Kältemittelkreislauf einer Wärmepumpe und
- Figur 2: einen Kältemittelkreislauf einer Wärmepumpe mit einem Injektions-System

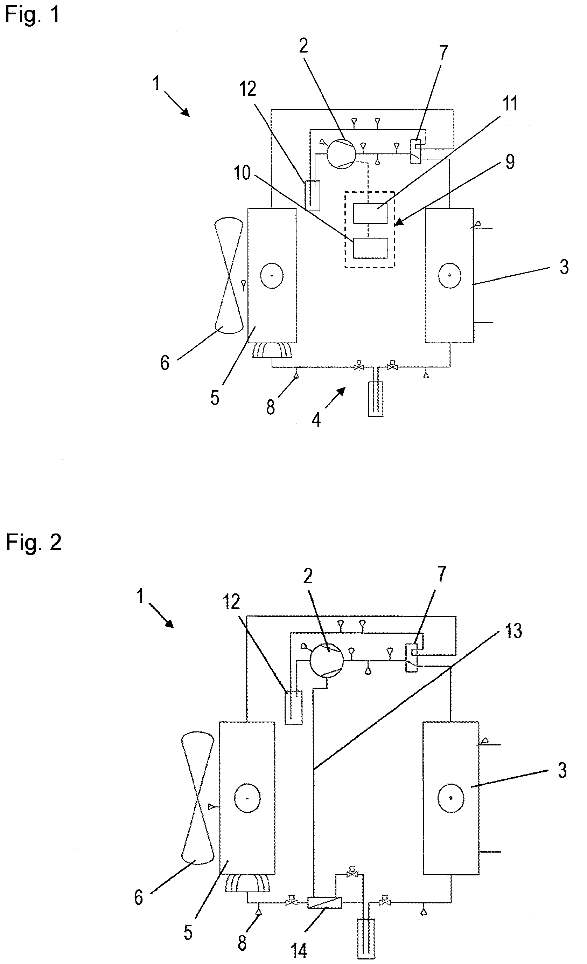

In Figur 1 ist ein Kältemittelkreislauf 1 einer Wärmepumpe dargestellt. Der Kältemittelkreislauf 1 weist einen Kompressor 2, einen Kondensator 3, eine Expansionseinrichtung 4 und einen Verdampfer 5 auf.

Die Wärmepumpe ist dabei als Luft-Wasserwärmepumpe ausgebildet, wobei der Verdampfer 5 mit Luft überstrichen wird, also thermische Energie aus einer Umgebungsluft aufnimmt.

Dem Verdampfer 5 ist ein Ventilator 6 zugeordnet, wobei eine Ventilatorleistung des Ventilators 6, also beispielsweise dessen Drehzahl, steuerbar ist. Über die Ventilatorleistung des Ventilators 6 kann die Menge der Luft, die den Verdampfer 5 durchströmt bzw. überströmt, gesteuert werden. Dadurch ist eine aus der Luft erfolgende Wärmeaufnahme des Verdampfers 5 beziehungsweise des ihn durchfließenden Kältemittels steuerbar.

Wenn die Wärmepumpe im Heizmodus läuft, erfolgt mit Hilfe des Kompressors 2 ein Verdichten des Kältemittels, das vom Kompressor 2 über ein Vierwegeventil 7 zum Kondensator 3 gelangt. Dort erfolgt eine Wärmeabgabe vom Kältemittel beispielsweise an Heizungswasser oder eine Raumluft, wobei das Kältemittel kondensiert. In im Wesentlichen flüssiger Form gelangt das Kältemittel dann zur Entspannungseinrichtung 4 und wird anschließend mit geringerem Druck zum Verdampfer 5 geführt. Dort nimmt das Kältemittel Wärmeenergie aus der Umgebung auf, beispielsweise aus Luft, die mit Hilfe des Ventilators 6 über und/oder durch den Verdampfer geführt wird. Das Kältemittel tritt dadurch in die gasförmige Phase ein und gelangt bei niedrigem Druck aber sehr geringer Temperatur zum Kompressor 2. Dort wird es erneut verdichtet und aufgewärmt.

Insbesondere dann, wenn die mit Hilfe des Ventilators 6 zum Verdampfer 5 geführte Luft eine relativ geringe Außentemperatur aufweist, tritt Kondensation an den Außenflächen des Verdampfers durch die in der Luft enthaltene Feuchtigkeit auf. Dies kann schließlich zu einer Vereisung des Verdampfers 5 führen. Da diese Vereisung beim Betrieb der Wärmepumpe einen erhöhten Energieaufwand nach sich zieht, verschlechtert sich damit ein Wirkungsgrad der Wärmepumpe. Dementsprechend ist es gewünscht, den Verdampfer insbesondere automatisiert wieder zu enteisen.

Dafür kann der Kältemittelkreislauf beziehungsweise die Wärmepumpe im Kühlmodus bzw. Kalt-Enteisungsmodus betrieben werden. Das Kältemittel wird dann vom Kompressor 2 über das Vierwegeventil 7, das dementsprechend umgestellt wird, nicht zum Kondensator 3, sondern zum Verdampfer 5 geführt, sodass das Kältemittel mit relativ hoher Temperatur zum Verdampfer 5 gelangt. Dementsprechend erfolgt eine Erwärmung des Verdampfers 5 und eine Wärmeabgabe im Verdampfer, die dazu führt, das eine eventuell an einer Oberfläche des Verdampfers 5 ausgebildete Vereisung taut. Der Kondensator 3 übernimmt hingegen die eigentliche Funktion des Verdampfers 5 und nimmt Wärme aus der Umgebung, in diesem Fall aus der Raumluft, auf, die dadurch entsprechend abgekühlt wird. Um dies im Kalt-Enteisungsmodus möglichst zu vermeiden, kann mit Hilfe eine Bypassverbindung erreicht werden, dass der Kondensator im Kalt-Enteisungsmodus umgangen wird, also nicht mit Kältemittel durchströmt wird.

Zur Erfassung einer Temperatur des Kältemittels ist ein Temperatursensor 8 zwischen Entspannungseinrichtung 4 und Verdampfer 5 im Kältemittelkreislauf 1 angeordnet. Im Heizmodus wird so bei diesem Ausführungsbeispiel in Strömungsrichtung des Kältemittels vor dem Verdampfer 5 die Kältemitteltemperatur erfasst und einer Steuerungseinrichtung 9 zugeführt. Im Kühlmodus oder im Kalt-Enteisungsmodus, also bei Wärmeaufnahme im eigentlichen Kondensator 3 und Wärmeabgabe im eigentlichen Verdampfer 5, befindet sich der Temperatursensor 8 zwangsläufig in Strömungsrichtung hinter dem eigentlichen Verdampfer 5.

Zur weiteren Regelung des Prozesses können zusätzliche Temperatur- und Drucksensoren im Kältemittelkreislauf 1 angeordnet werden.

Die Steuereinrichtung 9 kann beispielsweise eine Ausgabevorrichtung 10 und eine Recheneinheit 11 umfassen. Die Steuereinrichtung weist darüber hinaus insbesondere einen Speicher zum Hinterlegen von Werten u.a. für die Mindestaußentemperatur, die geräuschreduzierte Warm-Enteisungsleistung des Ventilators, die Standard-Enteisungsleistung von Ventilator und Kompressor, eine maximale Betriebsdauer, eine minimale Heizdauer, Länge eines Wartezeitraums, Minimaltemperatur des Kältemittels, minimale Kalt-Enteisungsdauer, maximale Kalt-Enteisungsdauer, minimale Warm-Enteisungsdauer und maximale Warm-Enteisungsdauer auf. Diese Werte können dabei beispielsweise durch Versuche ermittelt und fest hinterlegt sein, oder auch zumindest teilweise durch einen Bediener individuell vorgegeben bzw. geändert werden.

Bei diesem Ausführungsbeispiel ist im Kältemittelkreislauf 1 vor dem Kompressor 2 ein Flüssigkeitsabscheider 12 angeordnet.

Figur 2 zeigt einen erweiterten Kältemittelkreislauf 1, der zusätzlich ein Injektions-System 13, 14 aufweist und zwischen Entspannungseinrichtung 4 und dem Verdampfer 5 eingebunden ist. Durch das Injektions-System ist es möglich, während des Betriebs im Heizmodus zusätzliches flüssiges Kältemittel zum Kompressor zu führen und so den Wirkungsgrad zu steigern. Im Kühlmodus ist es hingegen denkbar, den eigentlichen Kondensator zu umgehen und damit eine Wärmeaufnahme beziehungsweise ein Abkühlen der Raumluft zu vermeiden oder zumindest zu verringern.

Zusätzlich wird eine durchschnittliche Temperaturdifferenz zwischen der Außentemperatur und der Kältemitteltemperatur zwischen Kondensator und Entspannungseinrichtung erfasst. Wenn eine Abweichung einer aktuell gemessenen Temperaturdifferenz zur durchschnittlichen Differenz zu groß ist, wird ebenfalls der Enteisungsmodus gestartet. Auch dabei ist es von der Außentemperatur abhängig, ob der Kalt-Enteisungsmodus oder der Warm-Enteisungsmodus gewählt wird.

Der Warm-Enteisungsmodus kann dann wiederum zwei Modi aufweisen, einen geräuschreduzierten Warm-Enteisungsmodus und einen Standard-Enteisungsmodus. Die Auswahl des entsprechenden Warm-Enteisungsmodus ist dann beispielsweise von eienr Benutzervorgabe abhängig.

Dabei kann zusätzlich vorgesehen sein, dass der Kalt-Enteisungsmodus gestartet wird, wenn eine Kältemitteltemperatur unterhalb einer Minimaltemperatur von beispielsweise - 27°C ist.

Nach Ablauf einer entsprechenden Zeitdauer, der Kalt-Enteisungsdauer oder der Warm-Enteisungsdauer, wird der Enteisungsmodus beendet und die Wärmepumpe im Heizmodus weiter betrieben.

Durch das erfindungsgemäße Verfahren ist ein Enteisen des Verdampfers möglich, ohne dass der Kältemittelkreislauf in umgekehrter Normal-Richtung betrieben werden muss.

Es erfolgt so im Warm-Enteisungsmodus keine Wärmeaufnahme durch den Kondensator. Dadurch steigert sich ein Heizkomfort.

Die Erfindung ist nicht auf eines der beschriebenen Ausführungsbeispiele beschränkt, sondern in vielfältiger Weise abwandelbar. So können beispielsweise noch weitere Betriebsmodi vorgesehen werden. Die Erfindung wird durch die anhängenden Ansprüche definiert.

## Patentansprüche

1. Verfahren zum Enteisen einer Wärmepumpe, die einen Kältemittelkreislauf (1) mit einem Kompressor (2), einem Kondensator (3) und einem Verdampfer (5) aufweist, wobei dem Verdampfer (5) ein steuerbarer Ventilator (6) zugeordnet ist, und zum Betreiben der Wärmepumpe zumindest folgende Betriebsmodi vorgesehen sind:
- Heizmodus, in dem der Kältemittekreislauf in einer Normal-Richtung betrieben wird, wobei vom Kondensator Wärme abgegeben und vom Verdampfer Wärme aufgenommen wird,
- Kühlmodus, in dem der Kältemittelkreislauf in zur Normal-Richtung umgekehrter Richtung betrieben wird, wobei vom Kondensator Wärme aufgenommen und vom Verdampfer Wärme abgegeben wird,
- Kalt-Enteisungsmodus, in dem der Kältemittelkreislauf in zur Normal-Richtung umgekehrter Richtung betrieben wird, wobei die Wärmepumpe zum gezielten Erwärmen des Verdampfers betrieben wird,
**dadurch gekennzeichnet, dass** ein Warm-Enteisungsmodus zum Enteisen des Verdampfers (5) vorgesehen ist, in dem der Kältemittelkreislauf in Normal-Richtung betrieben wird, wobei eine Kompressorleistung gegenüber dem Heizmodus reduziert und eine Ventilatorleistung gegenüber dem Heizmodus erhöht wird.

2. Verfahren nach Anspruch 1, **dadurch gekennzeichnet, dass** der Warm-Enteisungsmodus einen geräuschreduzierten Warm-Enteisungsmodus und einen Standard-Warm-Enteisungsmodus umfasst, wobei:
- im geräuschreduzierten Warm-Enteisungsmodus der Kompressor (2) gestoppt und die Ventilatorleistung auf eine geräuschreduzierte, vorgebbare Warm-Enteisungsleistung erhöht wird, die höher ist als eine durchschnittliche Ventilatorleistung im Heizmodus und
- im Standard-Warm-Enteisungsmodus die Kompressorleistung auf eine Standard-Warm-Enteisungsleistung größer Null reduziert und die Ventilatorleistung auf eine Standard-Warm-Enteisungsleistung erhöht wird, wobei
- die Standard-Warm-Enteisungsleistung des Kompressors geringer ist als eine Kompressorleistung im Heizmodus ist und
- die Standard-Warm-Enteisungsleistung des Ventilators höher als die geräuschreduzierte Warm-Enteisungsleistung ist und insbesondere einer maximalen Ventilatorleistung entspricht.

3. Verfahren nach einem der vorherigen Ansprüche, **dadurch gekennzeichnet, dass** der Heizmodus unterbrochen und der Kalt-Enteisungsmodus oder der geräuschreduzierte Warm-Enteisungsmodus oder der Standard-Warm-Enteisungsmodus insbesondere automatisch ausgewählt und gestartet wird, wenn im Heizmodus eine Temperaturdifferenz zwischen einer Kältemitteltemperatur, die benachbart zum Verdampfer im Kältemittelkreis erfasst wird, und einer Außentemperatur um einen vorgebbaren Betrag größer wird als eine durchschnittlich im Heizmodus vorhandene Temperaturdifferenz einer Kältemitteltemperatur benachbart zum Verdampfer und der Außentemperatur.

4. Verfahren nach Anspruch 3, **dadurch gekennzeichnet, dass** der Kalt-Enteisungsmodus gewählt und ausgeführt wird, wenn zumindest eine der folgenden Bedingungen erfüllt ist:
a) Die Außentemperatur ist unterhalb einer vorgebbaren Mindestaußentemperatur und/oder
b) Eine vorgebbare minimale Heizdauer ist noch nicht überschritten, wobei der Betrieb im Kalt-Enteisungsmodus dann nach Überschreiten der minimalen Heizdauer und zusätzlich Ablauf eines Wartezeitraums beginnt,
wobei in allen übrigen Fällen der Warm-Enteisungsmodus gewählt und gestartet wird.

5. Verfahren nach einem der vorherigen Ansprüche, **dadurch gekennzeichnet, dass** der Kalt-Enteisungsmodus gestartet wird, wenn eine Kältemitteltemperatur benachbart zum Verdampfer eine minimale Starttemperatur unterschreitet.

6. Verfahren nach einem der vorherigen Ansprüche, **dadurch gekennzeichnet, dass** der Kalt-Enteisungsmodus beendet wird, wenn zumindest eine der folgenden Bedingungen erfüllt ist:
a) eine Kältemitteltemperatur benachbart zum Verdampfer übersteigt eine Minimaltemperatur und eine minimale Kalt-Enteisungsdauer ist überschritten und/oder
b) eine maximale Kalt-Enteisungsdauer ist überschritten.

7. Verfahren nach einem der vorherigen Ansprüche, **dadurch gekennzeichnet, dass** der Warm-Enteisungsmodus beendet wird, wenn eine der folgenden Bedingungen erfüllt ist:
a) Die Temperaturdifferenz zwischen der Kältemitteltemperatur benachbart zum Verdampfer und der Außentemperatur nimmt zu oder bleibt konstant und eine minimale Warm-Enteisungsdauer ist überschritten, oder
b) Eine maximale Warm-Enteisungsdauer ist überschritten.

8. Verfahren nach Anspruch 6 oder 7, **dadurch gekennzeichnet, dass** es als Fehler registriert wird und insbesondere eine Fehlermeldung ausgegeben wird, wenn der Kalt-Enteisungsmodus durch Überschreiten der maximalen Kalt-Enteisungsdauer beendet wird oder wenn der Warm-Enteisungsmodus durch Überschreiten der maximalen Warm-Enteisungsdauer beendet wird, bevor die Kältemitteltemperatur hinter dem Verdampfer eine Minimaltemperatur übersteigt.

## Claims

1. Method for deicing a heat pump, which has a refrigerant circuit (1) with a compressor (2), a condenser (3) and an evaporator (5), wherein the evaporator (5) is assigned a controllable fan (6), and at least the following operating modes are provided for operating the heat pump:
- heating mode, in which the refrigerant circuit is operated in a normal direction, wherein heat is given off by the condenser and heat is taken up by the evaporator,
- cooling mode, in which the refrigerant circuit is operated in the direction that is the reverse of the normal direction, wherein heat is taken up by the condenser and heat is given off by the evaporator,
- cold deicing mode, in which the refrigerant circuit is operated in the direction that is the reverse of the normal direction, wherein the heat pump is operated for targeted heating of the evaporator,
**characterized in that** a warm deicing mode is provided for deicing the evaporator (5), in which the refrigerant circuit is operated in the normal direction, wherein a compressor output is reduced in comparison with the heating mode and a fan output is increased in comparison with the heating mode.

2. Method according to Claim 1, **characterized in that** the warm deicing mode comprises a warm deicing mode with reduced noise and a standard warm deicing mode, wherein:
- in the warm deicing mode with reduced noise, the compressor (2) is stopped and the fan output is increased to a predeterminable warm deicing output with reduced noise, which is higher than an average valve output in the heating mode, and
- in the standard warm deicing mode, the compressor output is reduced to a standard warm deicing output greater than zero and the fan output is increased to a standard warm deicing output, wherein
- the standard warm deicing output of the compressor is lower than a compressor output in the heating mode and
- the standard warm deicing output of the fan is higher than the warm deicing output with reduced noise and in particular corresponds to a maximum fan output.

3. Method according to one of the preceding claims, **characterized in that** the heating mode is interrupted and the cold deicing mode or the warm deicing mode with reduced noise or the standard warm deicing mode is selected and started, in particular automatically, if in the heating mode a temperature difference between a refrigerant temperature, which is sensed adjacent to the evaporator in the refrigerant circuit, and an outside temperature becomes greater by a predeterminable amount than a temperature difference of a refrigerant temperature adjacent to the evaporator and the outside temperature that there is on average in the heating mode.

4. Method according to Claim 3, **characterized in that** the cold deicing mode is chosen and performed if at least one of the following conditions is satisfied:
a) the outside temperature is below a predeterminable minimum outside temperature and/or
b) a predeterminable minimum heating duration has not yet been exceeded, wherein operation in the cold deicing mode then begins after exceeding of the minimum heating duration and additionally elapse of a waiting time period,
wherein in all other cases the warm deicing mode is chosen and started.

5. Method according to one of the preceding claims, **characterized in that** the cold deicing mode is started if a refrigerant temperature adjacent to the evaporator goes below a minimum starting temperature.

6. Method according to one of the preceding claims, **characterized in that** the cold deicing mode is ended if at least one of the following conditions is satisfied:
a) a refrigerant temperature adjacent to the evaporator exceeds a minimum temperature and a minimum cold deicing duration is exceeded and/or
b) a maximum cold deicing duration is exceeded.

7. Method according to one of the preceding claims, **characterized in that** the warm deicing mode is ended if one of the following conditions is satisfied:
a) the temperature difference between the refrigerant temperature adjacent to the evaporator and the outside temperature increases or remains constant and a minimum warm deicing duration is exceeded, or
b) a maximum warm deicing duration is exceeded.

8. Method according to Claim 6 or 7, **characterized in that** it is registered as an error, and in particular an error message is output, if the cold deicing mode is ended by exceeding of the maximum cold deicing duration or if the warm deicing mode is ended due to exceeding of the maximum warm deicing duration before the refrigerant temperature downstream of the evaporator exceeds a minimum temperature.

## Revendications

1. Procédé de dégivrage d'une pompe à chaleur, qui possède un circuit de fluide frigorigène (1) comprenant un compresseur (2), un condenseur (3) et un évaporateur (5), un ventilateur (6) commandable étant associé à l'évaporateur (5), et au moins les modes de fonctionnement suivants étant prévus pour le fonctionnement de la pompe à chaleur :
- mode de chauffage, dans lequel le circuit de fluide frigorigène fonctionne dans une direction normale, de la chaleur étant délivrée par le condenseur et de la chaleur étant absorbée par l'évaporateur,
- mode de refroidissement, dans lequel le circuit de fluide frigorigène fonctionne dans une direction opposée à la direction normale, de la chaleur étant absorbée par le condenseur et de la chaleur étant délivrée par l'évaporateur,
- mode de dégivrage à froid, dans lequel le circuit de fluide frigorigène fonctionne dans la direction opposée à la direction normale, la pompe à chaleur fonctionnant en vue d'un réchauffage ciblé de l'évaporateur,
**caractérisé en ce qu'**un mode de dégivrage à chaud est prévu pour le dégivrage de l'évaporateur (5), dans lequel le circuit de fluide frigorigène fonctionne dans la direction normale, une puissance du compresseur étant réduite par rapport au mode de chauffage et une puissance du ventilateur étant augmentée par rapport au mode de chauffage.

2. Procédé selon la revendication 1, **caractérisé en ce que** le mode de dégivrage à chaud comprend un mode de dégivrage à chaud à niveau sonore réduit et un mode de dégivrage à chaud standard :
- dans le mode de dégivrage à chaud à niveau sonore réduit, le compresseur (2) étant arrêté et la puissance du ventilateur étant augmentée à une puissance de dégivrage à chaud à niveau sonore réduit pouvant être prédéfinie, laquelle est supérieure à une puissance moyenne du ventilateur dans le mode de chauffage et
- dans le mode de dégivrage à chaud standard, la puissance du compresseur étant réduite à une puissance de dégivrage à chaud standard supérieure à zéro et la puissance du ventilateur étant augmentée à une puissance de dégivrage à chaud standard,
- la puissance de dégivrage à chaud standard du compresseur étant inférieure à une puissance du compresseur en mode de chauffage et
- la puissance de dégivrage à chaud standard du ventilateur étant supérieure à la puissance de dégivrage à chaud à niveau sonore réduit et correspondant notamment à une puissance maximale du ventilateur.

3. Procédé selon l'une des revendications précédentes, **caractérisé en ce que** le mode de chauffage est interrompu et le mode de dégivrage à froid ou le mode de dégivrage à chaud à niveau sonore réduit ou le mode de dégivrage à chaud standard est sélectionné et démarré notamment automatiquement si, en mode de chauffage, une différence de température entre une température du fluide frigorigène, qui est acquise dans le voisinage de l'évaporateur dans le circuit de fluide frigorigène, et une température extérieure est supérieure d'une amplitude pouvant être prédéfinie à une différence de température moyenne présente en mode de chauffage entre une température du fluide frigorigène dans le voisinage de l'évaporateur et la température extérieure.

4. Procédé selon la revendication 3, **caractérisé en ce que** le mode de dégivrage à froid est sélectionné et exécuté si au moins l'une des conditions suivantes est satisfaite :
a) la température extérieure est inférieure à une température extérieure minimale pouvant être prédéfinie et/ou
b) une durée de chauffage minimale pouvant être prédéfinie n'est pas encore dépassée, le fonctionnement dans le mode de dégivrage à froid ne commençant alors qu'après le dépassement de la durée de chauffage minimale et, en plus, l'écoulement d'une période d'attente,
le mode de dégivrage à chaud étant sélectionné et démarré dans tous les autres cas.

5. Procédé selon l'une des revendications précédentes, **caractérisé en ce que** le mode de dégivrage à froid est démarré lorsqu'une température du fluide frigorigène dans le voisinage de l'évaporateur devient inférieure à une température de démarrage minimale.

6. Procédé selon l'une des revendications précédentes, **caractérisé en ce que** le mode de dégivrage à froid prend fin si au moins l'une des conditions suivantes est satisfaite :
a) une température du fluide frigorigène dans le voisinage de l'évaporateur dépasse une température minimale et une durée de dégivrage à froid minimale est dépassée et/ou
b) une durée de dégivrage à froid maximale est dépassée.

7. Procédé selon l'une des revendications précédentes, **caractérisé en ce que** le mode de dégivrage à chaud prend fin si au moins l'une des conditions suivantes est satisfaite :
a) la différence de température entre la température du fluide frigorigène dans le voisinage de l'évaporateur et la température extérieure augmente ou reste constante et une durée de dégivrage à chaud minimale est dépassée ou
b) une durée de dégivrage à chaud maximale est dépassée.

8. Procédé selon la revendication 6 ou 7, **caractérisé en ce qu'**une erreur est enregistrée et en particulier un message d'erreur est délivré lorsque le mode de dégivrage à froid prend fin par un dépassement de la durée de dégivrage à froid maximale ou lorsque le mode de dégivrage à chaud prend fin par un dépassement de la durée de dégivrage à chaud maximale avant que la température du fluide frigorigène derrière l'évaporateur devienne supérieure à une température minimale.
